# DEMANDE DE BREVET EUROPEEN

(11) **EP 2 610 004 A1**
(43) Date de publication de la demande: **03.07.2013**
(21) Numéro de dépôt: 12290392.5
(22) Date de dépôt: 14.11.2012
(51) Int. Cl.: B01J 21/08, C07C 1/04, C07C 27/06

(54) **Procédé de fabrication d'hydrocarbures avec conditionnement du catalyseur**

(30) Priorité: 14.12.2011 FR 1103862
(71) Demandeur: IFP Energies nouvelles, 92852 Rueil-Malmaison Cedex (FR)
(72) Inventeur: Marion, Marie-Claire, 69390 VERNAISON (FR); Diehl, Fabrice, 69003 LYON (FR); Hughes, François, CHARLY, 69390 VERNAISON (FR)

(57) **Abrégé**

La présente invention concerne un procédé de fabrication en continu d'hydrocarbure à partir de gaz de synthèse en présence d'un catalyseur à base de cobalt qui comprend une étape d'approvisionnement du gaz de synthèse à partir d'une source de gaz de synthèse (1) dans un réacteur de synthèse Fischer-Tropsch (4). Le procédé inclut en outre les étapes suivantes:
a) conditionnement dans un réacteur de conditionnement (2) du catalyseur à l'état réduit par mise en contact avec un flux de gaz réducteur issu d'une source de gaz de synthèse alimentant le réacteur de synthèse, le gaz réducteur de conditionnement comprenant du monoxyde de carbone (CO) ou un mélange comprenant de l'hydrogène (H₂) et du monoxyde de carbone (CO) dont le rapport molaire H₂/CO est compris entre 0,1 et 0,9, à un température comprise entre 200 et 500°C, sous une pression totale comprise entre 0,1 et 5 MPa et sous un flux gazeux compris entre 1 et 20 NI/h/g de catalyseur à traiter.
b) alimentation du catalyseur réduit conditionné à l'étape a) dans le réacteur de synthèse (4).

## Description

### Domaine de l'invention

L'invention se rapporte à un procédé de fabrication d'hydrocarbure. En particulier le procédé de fabrication est un procédé Fischer-Tropsch de synthèse d'hydrocarbure à partir de gaz de synthèse.

### État de la technique

La synthèse d'hydrocarbures à partir d'un mélange constitué de CO et H₂, plus communément appelé gaz de synthèse, est connue depuis longtemps. On peut citer en particulier les travaux de F. Fischer et H. Tropsch qui, dès 1923, ont donné leur nom à cette transformation chimique, bien connue sous le nom de synthèse Fischer-Tropsch. La synthèse Fischer-Tropsch (FT) est une réaction qui permet de synthétiser des hydrocarbures liquides paraffiniques, oléfiniques et/ou des dérivés oxygénés à partir de gaz de synthèse, lui-même obtenu à partir de gaz naturel, charbon ou biomasse. Cette réaction, exploitée industriellement en Europe pendant la seconde guerre mondiale et également en Afrique du Sud depuis les années 50, a retrouvé un spectaculaire regain d'intérêt depuis les années 80-90 suite aux évolutions des coûts du pétrole et du gaz mais aussi pour des aspects environnementaux. On peut citer par exemple qu'actuellement de nombreux projets GTL (de l'anglais "gas to liquid") voient le jour, par exemple au Qatar.

La synthèse Fischer-Tropch (FT) est également une voie de valorisation du gaz naturel et permet, entre autre, de produire des carburants diesel de très bonne qualité et sans soufre à partir de gaz naturel.

De nombreux métaux peuvent être utilisés pour catalyser cette réaction, dont le cobalt (Co) et le fer (Fe). Le catalyseur est généralement préparé par imprégnation d'un support (par exemple un support à base d'alumine, de silice ou de silice alumine...) à partir d'un précurseur du métal, tel qu'un nitrate ou un acétate dudit métal. On obtient après une ou plusieurs étapes de séchage et de calcination le catalyseur dit "sous forme oxyde" appelé aussi "précurseur oxyde du catalyseur" qui comprend l'oxyde métallique supporté sur le support.

Etant donné que la synthèse Fischer-Tropsch est catalysée par le métal et non l'oxyde. Il convient donc ensuite de réduire le précurseur de catalyseur afin de transformer l'oxyde métallique (par exemple Co₃O₄) en phase métallique (Co(0)).

Généralement, la réduction du précurseur de catalyseur est réalisée dans une unité dédiée, sous atmosphère gazeuse en présence par exemple d'hydrogène. Après cette phase de réduction, le catalyseur est de préférence protégé de l'air afin d'éviter sa ré-oxydation et conserver ainsi la phase active métallique en l'état. Un des procédés utilisés industriellement pour protéger le catalyseur réduit durant son stockage et son transport jusqu'au chargement dans l'unité FT est un processus d'enrobage du catalyseur réduit sous paraffine. Dans des conditions de température suffisantes pour que les paraffines soient en phase liquide (généralement entre 50 et 200 °C), le catalyseur réduit est mélangé à ce liquide. Après refroidissement à température ambiante, le catalyseur se retrouve enrobé et protégé notamment de l'air par les paraffines solidifiées.

Par ailleurs il a été observé qu'au cours de la synthèse FT une partie du catalyseur et/ou le métal actif peuvent être entrainés dans la phase hydrocarbure formée, suite à des phénomènes d'attrition ou de dissolution et que le catalyseur lui-même se désactive.

Il est donc nécessaire de faire régulièrement un appoint en catalyseur "frais" pour maintenir la productivité de l'unité.

On connaît le document WO 2005/026292 qui divulgue une méthode pour réaliser un appoint de catalyseur. La méthode comprend les étapes suivantes:
- transfert du catalyseur FT réduit et enrobé de cire de paraffine dans un réacteur chauffé afin de fondre la gangue de cire;
- conditionnement du catalyseur débarrassé de son revêtement de cire, dans un réacteur alimenté en gaz comprenant un mélange H₂ et CO, de rapport molaire H₂/CO compris entre 1 et 3;
- alimentation du catalyseur réduit et conditionné dans le réacteur de synthèse Fischer-Tropsch.

Bien que fonctionnellement valable, le procédé selon l'art antérieur est encore perfectible en terme de conditionnement du catalyseur.

### Résumé de l'invention

Un but de l'invention est donc de proposer un procédé en continu de synthèse Fischer-Tropsch incorporant une étape de conditionnement du catalyseur au moins partiellement réduit, de sorte à former un catalyseur adapté à fonctionner immédiatement dans les conditions stationnaires rencontrées au sein du réacteur Fischer-Tropsch et manifestant une activité catalytique améliorée.

Ainsi selon l'invention, le procédé de fabrication en continu d'hydrocarbure à partir de gaz de synthèse en présence d'un catalyseur à base de cobalt comprend une étape de synthèse dans laquelle on fait réagir un gaz de synthèse en présence d'un catalyseur dans un réacteur de synthèse Fischer-Tropsch et est caractérisé en ce que l'on effectue en outre les étapes suivantes:
a) conditionnement dans un réacteur de conditionnement du catalyseur à l'état réduit par mise en contact avec un flux de gaz réducteur issu d'une source de gaz de synthèse alimentant le réacteur de synthèse, le gaz réducteur de conditionnement comprenant du monoxyde de carbone (CO) ou un mélange comprenant de l'hydrogène (H₂) et du monoxyde de carbone (CO) dont le rapport molaire H₂/CO est compris entre 0,01 et 0,9, à un température comprise entre 200 et 500°C, sous une pression totale comprise entre 0,1 et 5 MPa et sous un flux gazeux compris entre 1 et 20 NI/h/g de catalyseur à traiter.
b) alimentation du catalyseur réduit conditionné à l'étape a) dans le réacteur de synthèse.

La demanderesse a, de manière surprenante, observé qu'un conditionnement sous gaz réducteur riche en CO permettait de former un catalyseur dont les performances catalytiques sont améliorées et qui soit opérationnel plus rapidement dans les conditions stationnaires de synthèse FT.

Sans être lié par une quelconque théorie, la demanderesse corrèle cet effet observé à la présence d'une phase cristalline du cobalt métallique (notamment hexagonale compacte) différente par rapport au même catalyseur réduit sous H₂.

Lors de la préparation du catalyseur on forme d'abord un précurseur de catalyseur à base d'oxyde de cobalt que l'on soumet ensuite à une étape de réduction qui consiste généralement à mettre en contact le précurseur de catalyseur avec un gaz réducteur et à haute température (quelques centaines de degrés Celsius). Pendant cette étape de réduction, le cobalt présent est réduit au degré d'oxydation zéro; cependant le rendement de la réaction est fonction de différents paramètres tels que la durée, la température, le débit gazeux, la température, etc. Ainsi dans le contexte de l'invention, on entend désigner par le terme "catalyseur à l'état réduit à base de cobalt" un catalyseur comprenant au moins 20% en poids de cobalt au degré d'oxydation zéro. La détermination du taux de réduction peut se faire par toute méthode connue de l'homme du métier telle que le magnétisme, la potentiométrie, la diffraction des rayons X, la spectroscopie d'absorption de rayons X.

Dans le cadre de l'invention, le catalyseur réduit mis en oeuvre peut être obtenu par toute méthode connue de l'homme du métier. On peut citer par exemple une réduction sous hydrogène comme enseigné dans les document EP 110 357, EP 261 870, EP 527 032, EP 927 146 (liste non exhaustive).

De manière préférée, le procédé selon l'invention comprend une étape supplémentaire a') de conditionnement du catalyseur conditionné à l'étape a) sous un gaz réducteur dont le rapport molaire H₂/CO est compris entre 1 et 3.

En effet il a été observé que cette étape supplémentaire de conditionnement permettait avantageusement au catalyseur d'accéder plus rapidement à une activité catalytique stationnaire.

Conformément à un autre mode de réalisation, le procédé selon l'invention comprend une autre étape supplémentaire a") de conditionnement du catalyseur conditionné à l'étape a) sous un gaz réducteur dont le rapport molaire H₂/CO est supérieur à 3. Cette étape a") peut être suivie de l'étape a'), tel que défini plus haut, qui finalise le conditionnement du catalyseur. L'étape a") a pour but d'accélérer la décarburation de la fraction du catalyseur qui aurait été carburé lors de l'étape de conditionnement sous gaz riche en CO.

Les étapes a') et a") peuvent être opérées dans le même réacteur de conditionnement que celui de l'étape a).

Selon un autre mode de réalisation du procédé, les étapes a') et a") sont opérées dans un réacteur de conditionnement différent de celui de l'étape a).

De façon préférée, le catalyseur comprend un support poreux comprenant un oxyde d'un ou plusieurs éléments choisi parmi Al, Si, Ti, Zr, Ce, Cu, Zn, Ni, Co. Le catalyseur peut se présenter sous la forme de bâtonnets (extrudés), de billes ou de grains.

Selon un mode de réalisation préférée, le catalyseur comprend en outre un ou plusieurs métaux sélectionnés parmi le Cu, Mn, Ru, Pd, Pt, Re, La.

De façon avantageuse, l'alimentation du catalyseur conditionné dans le réacteur de synthèse est réalisée par mise sous pression du réacteur de conditionnement au moyen d'un gaz inerte ou du gaz de conditionnement.

### Brève description des figures

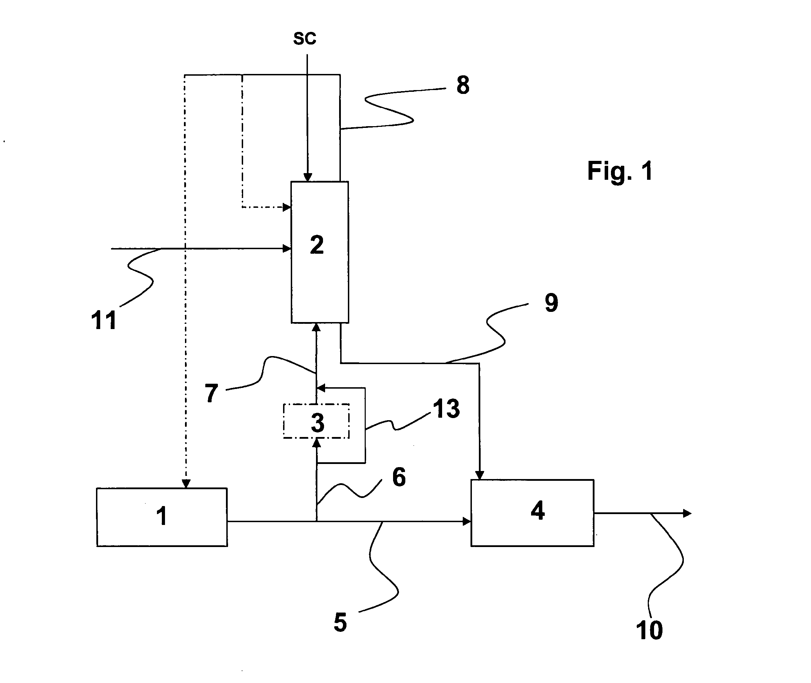

Ces aspects ainsi que d'autres aspects de l'invention seront clarifiés dans la description détaillée de modes de réalisation particuliers de l'invention, référence étant faite au dessin de la figure 1.
Fig.1 montre un schéma de principe du procédé selon l'invention.

### Description détaillée de modes de réalisation particuliers

La Fig. 1 montre un schéma de principe d'une unité de fabrication d'hydrocarbure par synthèse de type Fischer-Tropch qui comprend:
- un source 1 de gaz de synthèse comprenant comme constituants majoritaires de l'hydrogène (H₂) et du monoxyde de carbone (CO);
- un réacteur de conditionnement 2 alimenté en catalyseur à base de cobalt à l'état réduit, à partir d'une source de catalyseur SC (non représentée);
- une unité de traitement 3 du gaz de synthèse (cette unité de traitement 3 étant optionnelle);
- un réacteur de synthèse FT 4.

Comme montré sur la Fig. 1, la source 1 de gaz de synthèse alimente le réacteur de synthèse 4 via une conduite d'alimentation 5.

Une conduite 6 permet d'amener une partie du gaz de synthèse depuis la source 1 vers l'unité de traitement 3. Dans le présent exemple, la conduite 6 est connectée à la conduite d'alimentation 5. Cependant il est possible de relier directement la conduite 6 à la source de gaz de synthèse 1.

L'unité de traitement de gaz de synthèse peut être par exemple un dispositif de séparation membranaire gaz/gaz qui permet d'enrichir le gaz de synthèse en monoxyde de carbone CO. Ainsi en sortie de l'unité de traitement 3, le gaz réducteur a un rapport molaire H₂/CO compris généralement entre 0,01 et 0,9, de préférence entre 0,05 et 0,7, de manière encore préférée entre 0,1 et 0,5.

La conduite 13 sert de conduite de dérivation permettant d'alimenter directement en gaz de synthèse le réacteur de conditionnement 2 sans en modifier la composition.

De l'unité de traitement 3 part une conduite 7 destinée à alimenter le réacteur de conditionnement 2 en gaz réducteur dont la composition a été modifiée par rapport à la source 1.

Une conduite 11 permet en outre d'alimenter le réacteur 2 en un flux gazeux complémentaire (par exemple un gaz inerte) utile pour des phases transitoires (purge, mise sous pression...) ou pour diluer le flux gazeux apporté par les conduites 7 ou 13.

Dans le cadre de l'invention, le catalyseur à l'état réduit comprend du cobalt sous forme métallique (i.e. au degré d'oxydation zéro) et un support à base de silice, alumine, ou silice-alumine, zircone, oxyde de titane ou tout autre support comprenant un ou plusieurs des éléments choisi parmi Al, Si, Ti, Zr, Ce, Co, Cu, Zn, Ni.

Le catalyseur peut également comprendre un ou plusieurs métaux qui agissent en tant que promoteur. A titre d'exemple, le métal ou les métaux peuvent être sélectionnés parmi le Cu, Mn, Ru, Pd, Pt, Re, La.

Lorsque le précurseur de catalyseur est supporté, il peut être obtenu par un procédé impliquant une ou plusieurs étape(s) d'imprégnation du ou des précurseurs de métaux sur le support (par exemple le nitrate de cobalt), suivi d'une étape de séchage et enfin une étape de calcination comme enseigné dans le document EP 527 032. Cette étape de calcination vise notamment à décomposer le précurseur de métal et former l'oxyde métallique.

Le catalyseur solide réduit est mis en contact avec le gaz de conditionnement dans le réacteur 2 qui peut être du type lit fluidisé, lit fixe traversé, lit expansé ou dans une réacteur à contre-courant ou un réacteur de type slurry.

Les conditions opératoires pour le conditionnement sont de préférence les suivantes:
- température : comprise entre 200 et 500 °C, de préférence entre 200 °C et 300 °C ;
- pression totale : comprise entre 0,1 et 5 MPa, de préférence entre 1 et 4 MPa ;
- débit du flux gazeux rapporté à la quantité massique de solide catalytique traité : compris entre 0,1 et 20 NI/h/g, de préférence entre 1 et 10 NI/h/g;
- durée : comprise entre 1 et 48 h, de préférence entre 2 et 24 h, de préférence entre 2 et 15 h.

Comme montré sur la Fig. 1, le gaz réducteur effluent est évacué du réacteur de conditionnement 2 via une conduite 8 et peut éventuellement, et après traitement, être en partie ramené vers la source de gaz de synthèse 1 ou être en partie recyclé vers l'unité 3 ou le réacteur de réduction 2.

Le catalyseur dit "conditionné" est quant à lui soutiré du réacteur de conditionnement 2 et est acheminé vers le réacteur de synthèse FT 4 grâce à la conduite 9. L'alimentation du catalyseur peut être réalisée par transfert sous pression, par exemple par mise sous pression du réacteur de conditionnement de sorte que la pression à l'intérieur du réacteur 2 soit supérieure à celle régnant dans le réacteur de synthèse. Cette mise sous pression peut être obtenue par injection de gaz inerte ou du gaz de conditionnement.

Selon un mode de réalisation préférée, le catalyseur subit un seconde phase de conditionnement en présence d'un gaz réducteur dont le rapport molaire H₂/CO est compris entre 1 et 3; ce rapport molaire étant proche de celui du gaz de synthèse alimentant le réacteur FT.

Selon un autre mode de réalisation préféré, le catalyseur conditionné à l'étape a) sous gaz riche en CO subit une phase de conditionnement en présence d'un gaz réducteur dont le rapport molaire H₂/CO est supérieur à 3, avant sa mise en contact avec un gaz de synthèse dont le rapport molaire H₂/CO est sensiblement celui mis en oeuvre dans le réacteur de synthèse Fischer-Tropsch.

Ainsi si le procédé selon l'invention comporte plus d'une phase de conditionnement, la seconde phase et les suivantes peuvent être mise en oeuvre soit dans le même réacteur de conditionnement 2 ou dans un autre réacteur dédié à cet effet.

Quant à la réaction de synthèse FT, celle-ci est conduite dans le réacteur 4 dans des conditions opératoires classiques, à savoir:
- température : 200-250°C
- pression totale : 10-40 bar
- H₂/CO : 1 à 3.

Les hydrocarbures issus de la réaction FT sont extraits du réacteur de synthèse, via la conduite 10. Une partie des produits formés dans le réacteur 4 est généralement transformée par hydrotraitement (hydrocraquage et hydro-isomérisation) pour produire notamment des carburants.

On va décrire ci-dessous le fonctionnement du procédé selon l'invention.

### A) Phase de démarrage de l'unité

On charge dans le réacteur de conditionnement 2 une quantité Q utile de catalyseur réduit pour le démarrage de la synthèse FT dans le réacteur 4.

On procède ensuite à l'étape de conditionnement de la quantité utile Q de catalyseur. A cette fin, on introduit dans le réacteur 2 un gaz réducteur qui comprend soit du monoxyde de carbone (éventuellement dilué avec un gaz inerte), soit un mélange H₂ et CO via les conduites (6,7). Selon l'invention, ce gaz réducteur de conditionnement provient de la source de gaz de synthèse alimentant le réacteur FT 4. Le rapport molaire H₂/CO qui peut donc varier entre 0,01 à 0,9, de préférence entre 0,05 à 0,7 et encore plus préférée entre 0,1 et 0,5, est réglé au moyen de l'unité de traitement 3.

On amène alors le réacteur 2 dans les conditions optimales pour le conditionnement du catalyseur. Ce conditionnement peut être optimisé en agissant sur différents leviers tel que le profil de température, de pression, le débit de gaz réducteur et la durée du conditionnement.

Une fois l'étape de conditionnement du catalyseur achevée, la quantité totale Q utile est alors introduite dans le réacteur 4 et la réaction de synthèse FT à proprement dite peut être démarrée tandis que l'on procède à la fermeture de la conduite 9 d'alimentation du catalyseur réduit.

### B) Phase de fabrication en continu d'hydrocarbure

Dans un procédé Fischer-Tropsch, on observe une baisse d'activité et de productivité soit par perte de catalyseur due à son attrition (et entrainement des fines de catalyseur) et entrainement dans les produits formés, soit par désactivation du catalyseur au cours du temps. Ainsi, afin de maintenir la productivité de l'unité à son meilleur niveau, il est obligatoire de faire des appoints en catalyseur frais pour compenser ces pertes de matières ou d'activité.

Dans ce but, après démarrage de la synthèse, le réacteur de conditionnement 2 est de nouveau alimenté en catalyseur réduit (nouveau batch de catalyseur réduit) et en gaz réducteur afin de préparer un nouveau batch de catalyseur conditionné "frais" qui servira par la suite à approvisionner le réacteur FT 4 pendant le temps de fonctionnement en continu dudit réacteur 4.

Ainsi après cette phase de conditionnement le catalyseur peut etre envoyé dans le réacteur de synthèse 4 maintenu en opération. On parle ici d'appoint (en anglais "make-up") en catalyseur réalisé sans interruption de la réaction de synthèse Fischer-Tropsch.

Grâce au procédé selon l'invention cet appoint est réalisée directement à partir du réacteur de conditionnement, soit en mode continu, soit en mode semi-continu (par batch) sans nécessiter un arrêt, même temporaire, de l'unité de synthèse. En outre les conditions de conditionnement sont optimisées afin de former un catalyseur réduit dont l'activité catalytique est déjà adaptée pour fonctionner dans les conditions opératoires rencontrées dans le réacteur de synthèse FT; on dispose ainsi d'un catalyseur "prêt à l'emploi".

Un autre avantage du procédé selon l'invention est que ce dernier est aisé à piloter. En effet, la gestion des matières premières est relativement plus souple dans la mesure où le gaz de conditionnement provient d'une source unique de gaz de synthèse, qui est éventuellement traité avant alimentation dans le réacteur de conditionnement.

En résumé, il découle du procédé selon l'invention les avantages suivants:
- moindre coût en terme de gestion du flux de matières car le conditionnement du catalyseur est réalisée sur le site même de l'unité de synthèse à partir d'un gaz issu de la source de gaz utilisée pour la synthèse FT et qui est disponible en permanence;
- disposer d'un catalyseur actif et conditionné de manière optimale présentant des performances catalytiques améliorées, qui soit "prêt à l'emploi" pour réaliser la synthèse, de sorte à réduire au maximum (voire supprimer) le temps nécessaire pour que le catalyseur se construise afin de se trouver sous une forme active adaptée aux conditions stationnaires rencontrée dans le réacteur de synthèse FT;
- disposer d'une unité de synthèse FT pour laquelle les appoints de catalyseur "frais" n'impose pas une interruption de la réaction de synthèse Fischer-Tropsch ou un arrêt de l'unité, et sont réalisés en préservant les performances catalytiques du catalyseur.

Tous ces avantages concourent à améliorer la productivité du procédé par rapport à l'art antérieur.

### Exemples

### Exemple 1 (comparatif)

Un catalyseur à base de cobalt, supporté sur un support Siratox® (alumine stabilisée par Si, commercialisée par Sasol), dont la teneur en cobalt est de 13%, exprimée en poids par rapport au poids de catalyseur est préalablement réduit en présence d'hydrogène (H₂), à 400°C, pendant 4 h. Il s'agit du catalyseur de référence préalablement réduit.

30g de ce catalyseur sont chargés dans un réacteur de synthèse Fischer-Tropsch (FT) de type slurry, préalablement chargé d'un solvant paraffinique (octadécane) et portée à 120°C. Après chargement du catalyseur, le gaz de synthèse de rapport H₂/CO égale à 2.0 est introduit dans le réacteur de synthèse FT. La pression est portée à 20 bar et la température est portée à 230°C en suivant une rampe de 50°C/h jusqu'à 200°C puis de 10°C/h entre 200 et 230°C. La réaction de synthèse FT est alors conduite en continue dans les conditions suivantes : 20 bar, 230°C, sous une alimentation en gaz de synthèse de 100 NI/h et caractérisé par un rapport H₂/CO de 2.0 (soit composé à 1/3 de CO et 2/3 d'H₂). Les performances catalytiques sont mesurées au cours du temps.

### Exemple 2 (selon l'invention)

Le catalyseur préalablement réduit (selon l'exemple 1) est chargé dans le réacteur de conditionnement et est soumis à deux traitements successifs, sous CO, et sous gaz de synthèse, dont les conditions sont précisées dans le tableau 1 suivant :

**Tableau 1**

| Traitement | N°1 | N°2 |
|---|---|---|
| Gaz réducteur | CO (mélange CO/N₂) | H₂+CO |
| T (°C) | 200°C | 230°C |
| P (bar) | 30 bar | 20 bar |
| GHSV (NI/h/g) | 2 | 5 |
| Pureté du gaz réducteur (% vol) | 10 (10/90) | 100% |
| Rapport H₂/CO | - | 2 |
| Durée | 24 h | 2h |

A l'issu de ces traitements de conditionnement, 30g du catalyseur ainsi conditionné sont transférés dans le réacteur de synthèse FT et traités de la même façon que dans l'exemple 1. Les performances catalytiques sont mesurées au cours du temps sous 20 bar, 230°C, 100 NI/h de gaz de synthèse de rapport molaire H₂/CO de 2.

### Exemple 3 (selon l'invention)

Le catalyseur préalablement réduit (selon l'exemple 1) est chargé dans le réacteur de conditionnement et est soumis à trois traitements successifs, sous CO, et sous gaz de synthèse, dont les conditions sont précisées dans le tableau 2 suivant :

**Tableau 2**

| Traitement | N°1 | N°2 | N°3 |
|---|---|---|---|
| Gaz réducteur | CO (mélange CO/N₂) | H₂+CO | H₂+CO |
| T(°C) | 200°C | 230°C | 230°C |
| P (bar) | 30 bar | 20 bar | 20 bar |
| GHSV (NI/h/g) | 2 | 5 | 5 |
| Pureté du gaz réducteur (% vol) | 10 (10/90) | 100 | 100 |
| Rapport H₂/CO | - | 7 | 2 |
| Durée | 24 h | 2 h | 2 h |

A l'issu de ces traitements de conditionnement, 30g du catalyseur ainsi conditionné sont transférés dans le réacteur de synthèse FT et traités de la même façon que dans l'exemple 1. Les performances catalytiques sont mesurées au cours du temps sous 20 bar, 230°C, 100 NI/h de gaz de synthèse de rapport H₂/CO de 2.

Les performances catalytiques obtenues dans les trois tests sont données dans le tableau 3.

**Tableau 3**

| Exemple | | 1 (comparatif) | 2 (selon l'invention) | 3 (selon l'invention) |
|---|---|---|---|---|
| Performances à t | t (h) | | | |
| Conversion de CO (%) | 2 h | 10 | 15 | 50 |
| | 24 h | 33 | 50 | 51 |
| | 48 h | 42 | 51 | 51 |
| Sélectivité CH4 (% mol C) | 48 h | 11 | 9.5 | 9.5 |
| Sélectivité C5+ (% mol C) | 48 h | 80 | 82 | 82 |

La comparaison des résultats des tests catalytiques des catalyseurs présentés dans le tableau 3 illustrent bien le gain en terme de performances catalytiques des catalyseurs conditionnés selon l'invention :
- le taux de conversion de CO à 48h passe ainsi de 42% pour l'exemple comparatif à 51% pour les catalyseurs conditionnés selon les exemples 2 ou 3.
- on observe également une diminution de la sélectivité CH4 avec en revanche une augmentation de la sélectivité C5+.

En outre, la comparaison des performances obtenues en fonction du temps entre les exemples 2 et 3 selon l'invention, illustrent aussi l'intérêt supplémentaire du protocole de conditionnement décrit dans l'exemple 3. Deux heures après le démarrage de la synthèse, ce catalyseur ainsi conditionné est en "régime", ce qui se traduit notamment par un niveau de conversion élevé (50%).

## Revendications

1. Procédé de fabrication en continu d'hydrocarbure à partir de gaz de synthèse en présence d'un catalyseur à base de cobalt comprenant une étape de synthèse dans laquelle on fait réagir un gaz de synthèse en présence d'un catalyseur dans un réacteur de synthèse Fischer-Tropsch (4),
**caractérisé en ce que** l'on effectue en outre les étapes suivantes:
a) conditionnement dans un réacteur de conditionnement (2) du catalyseur à l'état réduit par mise en contact avec un flux de gaz réducteur issu d'une source de gaz de synthèse alimentant le réacteur de synthèse, le gaz réducteur de conditionnement comprenant du monoxyde de carbone (CO) ou un mélange comprenant de l'hydrogène (H₂) et du monoxyde de carbone (CO) dont le rapport molaire H₂/CO est compris entre 0,01 et 0,9, à un température comprise entre 200 et 500°C, sous une pression totale comprise entre 0,1 et 5 MPa et sous un flux gazeux compris entre 1 et 20 NI/h/g de catalyseur à traiter, pendant une durée comprise entre 1 et 48 h.
b) alimentation du catalyseur réduit conditionné à l'étape a) dans le réacteur de synthèse (4).

2. Procédé selon la revendication 1 comprenant une étape supplémentaire a') de conditionnement du catalyseur conditionné à l'étape a), en présence d'un gaz réducteur de conditionnement dont le rapport molaire H₂/CO est compris entre 1 et 3.

3. Procédé selon la revendication 2 comprenant une étape intermédiaire supplémentaire a") de conditionnement du catalyseur en présence d'un gaz réducteur dont le rapport molaire H₂/CO est supérieur à 3, l'étape a") étant conduite avant l'étape a').

4. Procédé selon la revendication 3, dans lequel les étapes a') et a") sont opérées dans le même réacteur de conditionnement que celui de l'étape a) ou c).

5. Procédé selon la revendication 3, dans lequel les étapes a') et a") sont opérées dans un réacteur de conditionnement différent de celui des étapes a) ou c).

6. Procédé de fabrication selon l'une des revendications précédentes comprenant une étape préalable de traitement du gaz de synthèse.

7. Procédé de fabrication selon l'une des revendications précédentes comprenant une étape préalable de traitement du gaz de synthèse pour épurer ledit gaz de synthèse en H₂ et fournir un gaz comprenant essentiellement du CO.

8. Procédé selon l'une des revendications précédentes dans lequel le catalyseur comprend un support comprenant un oxyde d'un ou plusieurs éléments choisi parmi Al, Si, Ti, Zr, Ce, Cu, Zn, Ni, Co.

9. Procédé selon l'une des revendications précédentes, dans lequel le catalyseur comprend en outre un ou plusieurs métaux sélectionnés parmi le Cu, Mn, Ru, Pd, Pt, Re, La.

10. Procédé selon l'une des revendications précédentes, dans lequel le réacteur de conditionnement est un réacteur de type lit fluidisé, lit fixe traversé, lit expansé ou un réacteur à contre-courant ou un réacteur de type slurry.

11. Procédé selon l'une des revendications précédentes, dans lequel les étapes b) ou d) sont réalisées par mise sous pression du réacteur de conditionnement (2) de sorte que la pression totale dans le réacteur de conditionnement (2) soit supérieure à la pression totale dans le réacteur de synthèse (4).
